# FASCICULE DE BREVET EUROPEEN

(11) **EP 2 576 192 B1**
(45) Date de publication et mention de la délivrance du brevet: **04.09.2019**
(21) Numéro de dépôt: 11727276.5
(22) Date de dépôt: 27.05.2011
(51) Int. Cl.: B29C 70/24, B29C 70/22, B29B 11/16, B29C 57/00

(54) **STRUCTURE FIBREUSE FORMANT UNE BRIDE ET UNE CONTRE-BRIDE**
EINEN FLANSCH UND GEGENFLANSCH BILDENDE FASERSTRUKTUR
FIBROUS STRUCTURE FORMING A FLANGE AND A COUNTER-FLANGE

(30) Priorité: 04.06.2010 FR 1054394
(43) Date de publication de la demande: 10.04.2013
(73) Titulaire: Safran Aircraft Engines, 75015 Paris (FR)
(72) Inventeur: OLIVIER, Loïc, 94140 Alfortville (FR)
(74) Mandataire: Milien, Jean-Baptiste Aurélien
(86) Numéro de dépôt international: PCT/FR2011/051216
(87) Numéro de publication internationale: WO 2011/151578

(56) Documents cités:
- CN-A- 1 916 477
- US-A- 4 065 339
- US-A- 4 900 072

## Description

La présente invention concerne une structure fibreuse, généralement appelée préforme, pour la fabrication d'une pièce composite comportant une bride et une contre-bride, la bride et la contre-bride étant toutes les deux formées à partir de la structure fibreuse. En particulier, l'invention concerne une structure fibreuse pour la fabrication d'une pièce de turbomachine ou de turboréacteur.

Dans les structures mécaniques classiques, des pièces sont souvent reliées entre elles à l'aide de brides et de contre-brides. D'une manière générale, une bride est une partie coudée à l'extrémité d'une pièce, qui s'étend sur tout ou partie de sa circonférence, et qui sert à joindre la dite pièce à une autre par boulonnage, les boulons traversant la bride de part en part. Une contre-bride est une pièce de renfort, qui présente la même forme générale que la bride, et qui est disposée entre les têtes des boulons et la bride. La contre-bride a pour fonction de répartir les efforts de maintien de la pièce sur l'ensemble de la bride. En effet, sans contre-bride ces efforts seraient localisés sur la bride au voisinage des têtes des boulons, ce qui fragiliserait la bride. Pour assurer correctement sa fonction, la contre-bride doit épouser parfaitement la surface de la bride.

Lorsque la pièce est réalisée en matériau composite (cette pièce étant généralement appelée « pièce composite »), la bride faisant partie de la pièce est également réalisée dans le même matériau composite. La contre-bride est généralement fabriquée dans un matériau différent. Les pièces composites les plus récentes sont réalisées à partir d'une structure fibreuse tissée en trois dimensions à partir de fibres (en carbone, kevlar, verre ou autre) et densifiée avec un polymère. Ainsi, dans une pièce composite, la structure fibreuse est noyée au sein d'une matrice polymère solide, cette matrice étant renforcée par la structure fibreuse.

Une technique connue pour réaliser une telle densification est par exemple l'imprégnation par voie liquide : on distingue l'infusion et l'injection, ces deux techniques étant connues par ailleurs.

Ainsi, à partir d'une pièce composite fabriquée selon les techniques ci-dessus, pour que la bride et la contre-bride s'épousent parfaitement, plusieurs solutions sont possibles.

La solution consistant à usiner les régions de la bride qui sont en contact avec la contre-bride, pour que la bride s'adapte parfaitement à la surface de la contre-bride, n'est pas admissible, car cet usinage couperait des fibres de la structure fibreuse, ce qui compromettrait l'intégrité mécanique de la bride, les fibres assurant la tenue mécanique de celle-ci.

La solution utilisée jusqu'à présent consiste à fabriquer une contre-bride en métal, par exemple du titane, parfaitement adaptée à la surface de la bride composite, les brides et contre-brides étant fabriquées en séries séparées. Notons que chaque pièce composite est unique et présente en particulier une surface extérieure qui est souvent différente des autres pièces fabriquées à partir du même moule et par la même technique. Ces variations d'une pièce composite à l'autre risquent de créer des défauts de contact entre la bride et la contre-bride, et par conséquent de générer des dommages ultérieurs. En outre, des contacts ponctuels éventuels entre les fibres de la bride et la contre-bride métallique risquent de générer des endommagements ultérieurs. De même les éventuelles zones résiduelles formant des poches de résine entre la bride et la contre-bride risquent également de générer des endommagements ultérieurs. Par ailleurs le métal est un matériau lourd par rapport aux matériaux composites, sa densité étant trois fois plus grande, ce qui présente également un inconvénient dans le cadre de l'optimisation de la masse des turboréacteurs et turbomachines.

US4900072 divulgue une bride de tuyau renforcée par des fibres, US4065339 divulgue un procédé pour fabriquer des tubes avec des brides en plastique renforcé par des fibres et CN1916477 divulgue un tube fabriqué en matériau composite et procédé de fabrication.

Le but de la présente invention est de remédier substantiellement aux inconvénients énoncés ci-dessus.

L'invention atteint ce but en proposant une structure fibreuse selon la revendication 1 pour la fabrication d'une pièce composite comprenant une matrice renforcée par ladite structure fibreuse, ladite structure fibreuse étant réalisée par tissage tridimensionnel et présentant une partie principale et une bordure adjacente à la partie principale, dans laquelle ladite bordure présente une épaisseur supérieure à l'épaisseur de la partie principale et dans laquelle la bordure comprend une première partie disposée dans la continuité de la partie principale et une seconde partie superposée à la première partie, ladite bordure étant ainsi configurée pour être pliée du côté de la seconde partie de sorte que lesdites première et seconde
parties forment respectivement une bride et une contre-bride pour la fixation de ladite pièce.

On comprend que lorsque la pièce composite est fabriquée à partir de la structure fibreuse, la partie principale de la structure fibreuse forme le corps de la pièce composite tandis que la bordure forme un ensemble bride et contre-bride faisant partie intégrante de la pièce composite. La bride est formée à partir de la première partie tandis que la contre-bride est formée à partir de la seconde partie. La seconde partie est superposée à la première partie et forme ainsi une surépaisseur.

Le pliage de la bordure de la structure fibreuse permet de réaliser la partie coudée entre la bride et le corps de la pièce composite. Lorsque la bordure est disposée dans le prolongement de la partie principale, la seconde partie disposée sur la première partie fait saillie par rapport à un des plans délimitant l'épaisseur de la partie principale. On comprend donc que la première partie de la bordure présente une épaisseur inférieure ou égale à l'épaisseur de la partie principale tandis que l'épaisseur de la seconde partie est telle que l'épaisseur de la bordure, correspondant à la somme des épaisseurs de la première et de la seconde partie, est supérieure à l'épaisseur de la partie principale. Ainsi, lorsque la bordure n'est pas pliée, c'est-à-dire lorsque la bordure est disposée dans le prolongement de la partie principale, la seconde partie forme un épaulement.

On notera qu'en utilisant l'expression « dans la continuité » on entend qu'une partie est disposée à la suite d'une autre partie mais que ces deux parties ne sont pas nécessairement disposées dans un même plan. Par l'expression « dans le prolongement », on entend qu'une partie est disposée à la suite d'une autre partie, ces deux parties étant disposées dans un même plan.

Ainsi, en pliant la bordure du côté de la seconde partie, c'est-à-dire en ramenant la seconde partie de la bordure vers la partie principale on donne à la structure fibreuse la forme finale de l'ensemble bride et contre-bride par rapport au corps de la pièce. Lors de ce pliage, on comprend donc qu'on ramène l'épaulement formé par la seconde partie vers la partie principale. Avantageusement, cet épaulement est en contact avec la partie principale.

On comprend en outre que la première et la seconde partie forment une seule et même entité directement reliée à la partie principale. De même, lorsque la pièce composite est fabriquée, la bride et la contre-bride forment une seule entité, cette entité étant directement jointe au corps de la pièce composite et dans sa continuité.

Ainsi, grâce à la structure fibreuse selon l'invention, la contre-bride est directement fabriquée et positionnée par rapport à la bride lors de la fabrication de la pièce composite. Par conséquent, les opérations d'ajustage et d'usinage de la contre-bride rencontrées dans l'art antérieur n'ont plus lieu d'être. On réalise ainsi un gain de temps lors de la fabrication de la pièce composite et de la contre-bride. On réalise en outre une économie substantielle car il n'est plus nécessaire de fournir une contre-bride distincte de la pièce composite, et d'usiner cette dernière. Par ailleurs, l'assemblage de la pièce composite dans son contexte, par exemple au sein d'une turbomachine, est facilité car il n'est plus nécessaire d'amener une contre-bride distincte de la pièce composite.

Enfin, on réalise un gain de masse en réalisant la contre-bride en matériau composite. En effet, les matériaux composites généralement utilisés présentent une densité plus faible et un module de Young comparable au titane, matériau dans lequel la contre-bride de l'art antérieur est réalisée, de sorte que pour un encombrement comparable, la contre-bride en matériau composite est plus légère tout en présentant des caractéristiques mécaniques comparables, notamment du point de vue de la raideur. On comprend ainsi que grâce à la structure fibreuse selon l'invention, on peut fabriquer une pièce composite de remplacement d'une pièce fabriquée selon les techniques de l'art antérieur, dont l'ensemble bride et contre-bride présente la même épaisseur et les mêmes caractéristiques mécaniques. Par exemple, la structure fibreuse peut être réalisée à partir de fibres de carbone tandis que la résine est une résine époxy.

Avantageusement, la bordure présente une extrémité libre, la première partie étant partiellement disjointe de la seconde partie du côté de l'extrémité libre de la bordure.

On comprend donc que la bordure présente une extrémité libre, cette extrémité libre étant disposée à l'opposé, par rapport à la bordure, du côté où la bordure est reliée à la partie principale. Ainsi, la première partie est disjointe de la seconde partie du côté de l'extrémité libre de la bordure tandis que première partie et la seconde partie sont jointes du côté de la jonction de la bordure avec la partie principale. Préférentiellement, la première partie et la seconde partie sont disjointes le long d'un plan sensiblement parallèle à un des plans définissant l'épaisseur de la bordure. Avantageusement, la première partie et la seconde partie sont disjointes sur une longueur d'environ 80% de la distance séparant l'extrémité libre de la bordure et le côté de la bordure relié à la partie principale.

Cette disjonction (ou séparation) partielle permet, lors du pliage de la bordure, à la première partie de glisser tangentiellement par rapport à la seconde partie, ce qui facilite l'opération de pliage. En outre, le pliage étant facilité, la structure fibreuse ne forme pas ou peu d'irrégularités dans les coins de pliages. Ces irrégularités à éviter sont par exemple des bourrelés là où les fibres sont écrasées les unes sur les autres et/ou des écartements entre les fibres, là où les fibres sont soumises à des efforts de traction. Ainsi, en séparant partiellement la première partie de la seconde partie, on améliore la régularité du tissage au sein de la structure fibreuse, et en particulier dans les coins de pliage, lorsque la bordure est pliée, de sorte que les caractéristiques mécaniques de la bride et de la contre-bride dans la pièce composite finie sont améliorées.

On comprend donc que la première partie est partiellement disjointe de la seconde partie dans la structure fibreuse, tandis que lorsque la pièce est fabriquée, la bride et la contre-bride forment une seule et même entité totalement jointe au sein d'une matrice en polymère.

Avantageusement, l'épaisseur de la première partie est différente de l'épaisseur de la seconde partie.

Ceci permet d'ajuster les épaisseurs de chacune des parties en fonction des caractéristiques mécaniques désirées.

Avantageusement, la seconde partie présente des fibres de chaine plus courtes que les fibres de chaine de la première partie.

Les fibres de chaines sont les fibres qui s'étendent depuis la partie principale vers la bordure, c'est-à-dire sensiblement perpendiculairement à la bordure. Les fibres de chaines sont les fibres qui présentent le plus de résistance au pliage de la bordure. Ainsi, en raccourcissant les fibres de chaines dans la seconde partie, le pliage de la bordure est plus aisé.

Préférentiellement, la partie principale s'étend selon une direction longitudinale et selon une direction transversale, la première partie s'étendant dans la continuité de la partie principale selon la direction longitudinale, les fibres de la première partie étant majoritairement orientées selon la direction longitudinale tandis que les fibres de la seconde partie sont majoritairement orientées selon la direction transversale.

On comprend que les fibres longitudinales sont les fibres de chaine tandis que les fibres transversales sont les fibres de trame. Par « une majorité », on entend plus de 50%.

La première partie, destinée à former la bride qui assure le maintien de la pièce composite, présente avantageusement une majorité de fibres longitudinales, c'est-à-dire de fibres s'étendant depuis la partie principale vers la première partie. On comprend que ces fibres longitudinales sont communes à la première partie et à la partie principale. Le maintien de la pièce composite par la bride est principalement assuré par ces fibres longitudinales. Par conséquent, grâce à cette majorité de fibres longitudinales, les propriétés mécaniques de maintien de la bride sont améliorées.

La seconde partie destinée à former la contre-bride assure une fonction de renfort de la bride. Pour assurer cette fonction, la présence de fibres transversales est préférée. En effet, ces fibres transversales s'étendent sur toute l'étendue transversale de la contre-bride, de sorte que ces fibres transversales confèrent une résistance mécanique, et plus particulièrement une raideur en flexion, meilleure que celles conférées par les fibres longitudinales. Par ailleurs, comme exposé auparavant, les fibres longitudinales sont les fibres qui opposent le plus de résistance au pliage de la bordure. Par conséquent, en fournissant une seconde partie présentant une majorité de fibres transversales par rapport aux fibres longitudinales, on améliore la résistance mécanique de la contre-bride sans limiter les capacités de pliage de la bordure.

L'invention concerne également une pièce composite comprenant une matrice renforcée par une structure fibreuse, selon l'invention, pour la fabrication d'une pièce composite, ladite pièce composite présentant une bride et une contre-bride de fixation formées respectivement par la première partie et par la seconde partie de ladite structure fibreuse.

Selon un mode de réalisation, la pièce composite, forme une aube de redressement, la bride et la contre-bride étant disposées au voisinage du pied de cette aube de redressement.

On notera qu'une aube de redressement, en particulier une aube de redressement d'entrée ou de sortie de turboréacteur ou de turbomachine (également connue sous l'acronyme IGV ou OGV pour « inlet/outlet guide vane »), s'étend selon une direction axiale et que le pied d'aube est disposé au voisinage d'une extrémité axiale de l'aube. L'aube est fixée à un support d'aube, généralement une roue d'aube, au voisinage du pied d'aube.

Selon un autre mode de réalisation, la pièce composite forme une pièce cylindrique de section circulaire, cette pièce cylindrique s'étendant selon une direction axiale, la bride et la contre-bride étant annulaires et disposées au voisinage d'une extrémité axiale de la pièce cylindrique. Avantageusement, la pièce cylindrique forme une virole.

L'invention concerne en outre un procédé de fabrication d'une structure fibreuse pour la fabrication d'une pièce composite comprenant une matrice renforcée par ladite structure fibreuse, dans lequel on réalise la structure fibreuse selon l'invention par tissage tridimensionnel.

Avantageusement, on ajoute des torons lors du tissage de la structure fibreuse pour réaliser la seconde partie.

On comprend que les torons sont des fibres supplémentaires introduites lors du tissage de la seconde partie.

Avantageusement, on délie en partie la seconde partie de la première partie.

Préférentiellement, lors du tissage, les fibres séparent, ou moins partiellement, les plans de chaine de la première partie des plans de chaine de la seconde partie.

L'invention concerne en outre un procédé de fabrication d'une pièce composite comprenant une matrice renforcée par une structure fibreuse dans lequel on fournit une structure fibreuse selon l'invention ; on plie la bordure de cette structure fibreuse pour former un ensemble bride et contre-bride pour la fixation de ladite pièce ; et on densifie ladite structure fibreuse avec un polymère, les fibres de ladite structure fibreuse étant noyées dans une matrice formée par le polymère.

Avantageusement, on usine l'extrémité libre de la bordure de sorte que l'extrémité libre de la première partie et l'extrémité libre de la seconde partie sont disposés dans la continuité l'une de l'autre.

L'invention et ses avantages seront mieux compris à la lecture de la description détaillée qui suit de différents modes de réalisation de l'invention donnés à titre d'exemples non limitatifs. Cette description fait référence aux planches de dessins annexées, sur lesquelles :
- la figure 1 représente un premier mode de réalisation de la structure fibreuse, en vue partielle en coupe transversale, la bordure étant disposée dans le prolongement de la partie principale,
- la figure 2 représente le premier mode de réalisation en vue partielle en coupe transversale, la bordure étant pliée,
- la figure 3 représente un deuxième mode de réalisation de la structure fibreuse, en vue partielle en coupe transversale, la bordure étant disposée dans le prolongement de la partie principale,
- la figure 4 représente le deuxième mode de réalisation en vue partielle en coupe transversale, la bordure étant pliée,
- La figure 5 représente une pièce composite, en vue partielle en section transversale, obtenue à partir de la structure fibreuse de la figure 2,
- la figure 6 représente une aube de redressement composite, et
- la figure 7 représente une virole composite.

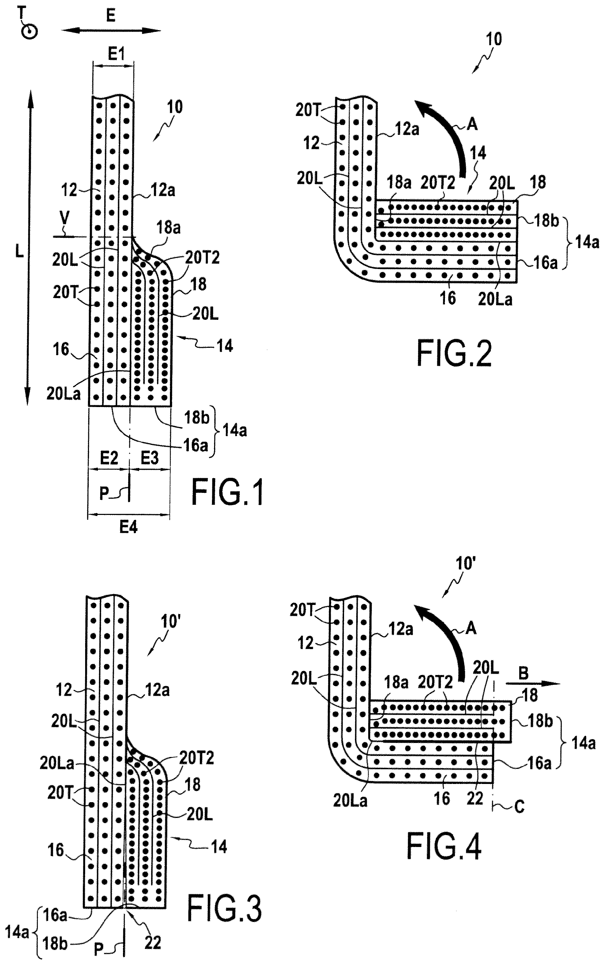

La figure 1 représente un premier mode de réalisation d'une structure fibreuse 10 présentant une partie principale 12 et une bordure 14 adjacente à la partie principale 12. La structure fibreuse 10 est vue partiellement en coupe transversale, la bordure 14 étant disposée dans le prolongement de la partie principale 12. Sur la figure 1, la flèche L représente la direction longitudinale tandis que la flèche E représente la direction de l'épaisseur. La direction transverse s'étend perpendiculairement à la figure 1 (i.e. perpendiculairement à la direction longitudinale et à la direction de l'épaisseur) et est représenté par la flèche T.

La bordure 14 présente une première partie 16 et une seconde partie 18 qui sont jointes. Le plan P représenté en traits discontinus, défini dans le prolongement de la face extérieure 12a de la partie principale 12, sépare la première partie 16 de la seconde partie 18. Notons que dans ce premier mode de réalisation cette séparation est symbolique. La seconde partie 18 fait saillie par rapport à la partie principale 12, et forme un épaulement 18a. Un plan V représenté en traits discontinus s'étendant dans la direction de l'épaisseur E et disposé à l'aplomb de l'épaulement 18a symbolise la séparation entre la partie principale 12 et la première partie 16.

Dans ce premier mode de réalisation, la partie principale 12 a une épaisseur E1, la première partie 16 a une épaisseur E2 (dans cet exemple E1 = E2), et la seconde partie 18 a une épaisseur E3. La seconde partie 18 étant superposée à la première partie 16 en formant une surépaisseur, la bordure 14 présente une épaisseur E4 supérieure à l'épaisseur E1 de la partie principale 12, cette épaisseur E4 étant égale à la somme des épaisseurs de la première et de la seconde partie 16 et 18 (E4 = E2 + E3).

Les fibres longitudinales 20L s'étendent selon la direction longitudinale L. Les fibres longitudinales 20L de la première partie 14 sont communes, au moins en partie, avec les fibres longitudinales 20L de la partie principale 12. C'est-à-dire que tout ou partie des fibres longitudinales 20L de la première partie 16 s'étendent également dans la partie principale 12. Les fibres transversales 20T et 20T2 s'étendent selon la direction transverse T. Dans la première partie 16, il y a plus de fibres longitudinales 20L que fibres transverses 20T. Inversement, dans la seconde partie 18 il y a plus de fibres transverses 20T2 que de fibres longitudinales 20L. On notera que ce nombre de fibres d'un premier type (en particulier de fibres longitudinales 20L) plus ou moins important par rapport au nombre de fibre d'un second type n'est pas nécessairement apparent sur les figures qui représentent la structure fibreuse 10 schématiquement en deux dimensions. Il faut considérer la structure fibreuse 10 dans son ensemble en trois dimensions.

En outre, les fibres longitudinales 20L de la seconde partie 18 sont embuvées par rapport aux fibres longitudinales 20L de la première partie 16, et ne s'étendent donc pas jusqu'à l'extrémité libre 14a de la bordure 14, ou, en d'autres termes, jusqu'à l'extrémité libre 18b de la seconde partie 18, lorsque la bordure 14 est disposé dans le prolongement de la première partie 12. En d'autres termes, les fibres de chaine (ou fibre longitudinales 20L) de la seconde partie 18 sont plus courtes que les fibres de chaine de la première partie 16 ; les fibres de chaine de la seconde partie 18 étant en retrait par rapport à l'extrémité libre 18b.

Dans cet exemple, pour tisser la seconde partie 18, on dévie des fibres longitudinales 20L (fibres de chaine) de la partie principale 12 et on introduit des fibres transversales 20T2 (fibres de trame) supplémentaires. Ces fibres transversales 20T2 constituent des torons ; l'introduction de ces fibres transversales 20T2 supplémentaires constituant par conséquent un ajout de torons. Bien entendu, les fibres longitudinales 20L déviées sont choisies selon la direction transversale T, par exemple une fibre longitudinale 20L sur trois comptées selon la direction transversale L est déviée pour former le tissage, en ajoutant des fibres transversales 20T2, de la seconde partie 18.

Dans ce mode de réalisation, les fibres longitudinales 20L de la seconde partie 18 sont, au moins en partie, communes avec une partie des fibres longitudinales 20L de la partie principale 12. Selon une variante, ces fibres longitudinales 20L de la seconde partie 18 sont distinctes et indépendantes des fibres 20L de la partie principale 12.

On notera que la représentation des fibres est très schématique pour la clarté de l'exposé. Le lecteur comprendra cependant que, conformément à un tissage en trois dimensions, les fibres longitudinales 20L s'étendent en réalité selon la direction de l'épaisseur E et selon la direction longitudinale L. De même, les fibres transverses 20T et 20T2 s'étendent en réalité selon la direction de l'épaisseur E et selon la direction transverse T.

La figure 2 représente la structure fibreuse 10 de la figure 1 lorsque la bordure 14 est pliée du côté de la seconde partie 18, selon la flèche A. L'épaulement 18a est en contact avec la face extérieure 12a de la partie principale 12. Lorsque la structure fibreuse 10 est noyée dans un polymère afin de former une pièce composite, la première partie 16 forme une bride tandis que la seconde partie 18 forme une contre-bride. Dans cet exemple, la face 12a de la partie principale est une face extérieure. Bien entendu, selon une variante, cette face 12a peut-être une face intérieure de la pièce composite. On remarquera que les fibres longitudinales 20L embuvées de la seconde partie 18 s'étendent, grâce à la position pliée de la bordure 14, jusqu'à l'extrémité libre 14a de la bordure, ou, en d'autres termes, jusqu'à l'extrémité libre 18b de la seconde partie 18.

La figure 3 représente un second mode de réalisation d'une structure fibreuse 10' similaire à la structure fibreuse 10 du premier mode de réalisation. La seule différence est que la première partie 16 est partiellement disjointe de la seconde partie 18. On notera que les éléments similaires entre le premier et le second mode de réalisation ne sont pas décrits de nouveau et présentent le même signe de référence.

La séparation 22 s'étend dans le plan P, selon la direction longitudinale L et transversale T. Cette séparation 22 est débouchante sur l'extrémité libre 14a de la bordure 14. La seconde partie 18 est reliée à la première partie 16 du côté de l'épaulement 18a, au sein de la bordure 14. Cette séparation 22 est réalisée par déliage, lors du tissage de la structure fibreuse en isolant les fibres de chaine de la première partie 16 des fibres de chaine de la seconde partie 18.

La figure 4 représente la structure fibreuse 10' de la figure 3 lorsque la bordure 14 est pliée du côté de la seconde partie 18 selon la flèche A. La séparation 22 permet à la seconde partie 18 de glisser tangentiellement selon la flèche B, à l'opposé de la partie principale 12, par rapport à la première partie 16. Dans cette structure fibreuse 10', l'ensemble de la seconde partie 18 ayant glissé tangentiellement par rapport à la première partie 16, les fibres longitudinales embuvées 20L de la seconde partie 18 n'ont pas pu rejoindre l'extrémité libre 14a de la bordure 14 comme cela se produit lors du pliage de la bordure 14 de la structure fibreuse 10 du premier mode de réalisation.

Lorsque la seconde partie 18 a glissé par rapport à la première partie 16, on usine la bordure 14a, comprenant les extrémités libres 16a et 18b de la première et de la seconde partie 16 et 18, de sorte que ces extrémités libre 16a et 18b soient disposées dans le prolongement l'une de l'autre. Dans cet exemple on coupe la portion de la seconde partie 18 qui dépasse par rapport au plan de coupe C défini par l'extrémité libre 16a de la première partie 16. On notera que selon une variante, cet usinage est réalisé après la fabrication de la pièce composite, lorsque la structure fibreuse 10' est noyée dans une matrice en polymère.

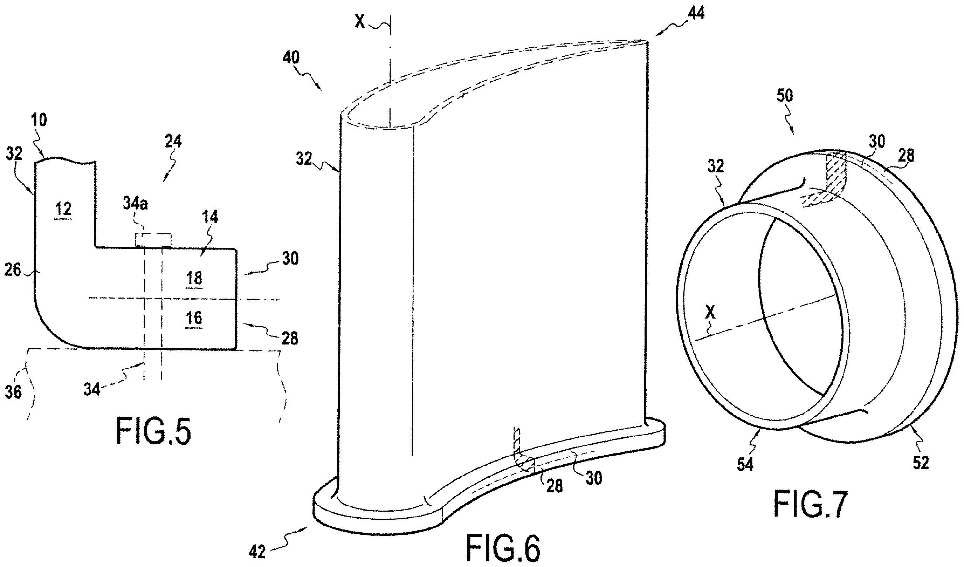

La figure 5 représente une pièce composite 24 vue partiellement en coupe transversale, réalisée à partir de la structure fibreuse 10. Bien entendu, cette pièce 24 peut-être fabriquée, selon une variante, à partir de la structure fibreuse 10'.

Dans la pièce 24, la structure fibreuse 10 est noyée dans une matrice en polymère 26. La première partie 16 et la seconde partie 18 sont symboliquement séparées par un trait discontinu. Bien entendu, que la pièce 24 soit fabriquée à partir de la structure fibreuse 10 ou 10', la première partie 16 et la seconde partie 18 sont toutes les deux noyées dans la matrice 26 et forment une seule entité (i.e. un seul bloc). Ainsi, la première partie 16 forme, dans la pièce 24, une bride 28 tandis que la seconde partie 18 forme une contre-bride 30. La partie principale 12 forme, dans la pièce 24, le corps 32 de la pièce 24.

Sur la figure 5 sont également représentés en traits discontinus un boulon 34 et un support 36 auquel est fixée la pièce 24. La bride 28 est disposée du côté du support 36 tandis que la contre-bride 30 est disposée du côté de la tête 34a du boulon 34. Ainsi la contre-bride 30 reprend les efforts locaux générés par la tête 34a du boulon 34 et les repartit dans l'ensemble de la bride 28. On notera que le tissage des fibres tel que décrit en référence aux figures 1 à 4, permet avantageusement de former une contre-bride 30 résistant aux efforts locaux dus à la coopération de la contre-bride 30 avec la tête 34a du boulon 34 et de former une bride 28 maintenant solidement le corps 32 de la pièce 24 au support 34.

Selon une variante, les première et seconde parties 16 et 18 présentent un tissage similaire, de sorte que la bride et de la contre-bride présentent une structure interne similaire et symétrique. Ainsi la tête du boulon peut être disposée indifféremment du côté de la bride 28 ou du côté de la contre-bride 30. Selon une autre variante, le tissage des première et seconde parties 16 et 18 est inversé par rapport à celui décrit dans les structures fibreuses 10 et 10', de sorte que les positions de la bride et de la contre-bride sont inversées par rapport à celles indiquées sur la figure 5, ce qui permet un montage inversé par rapport à celui représenté sur la figure 5, le support 36 étant disposé à la place de la tête 34a du boulon 34 et vice-versa.

La figure 6 représente une aube de redressement 40 formée à partir d'une structure fibreuse similaire à la structure fibreuse 10 ou 10'. La section dans la matière hachurée représente la section de la figure 5. L'aube 40 s'étend selon une direction axiale X. Le pied d'aube 42 présente un ensemble bride 28 et contre-bride 30 tel que décrit précédemment en référence à la figure 5. Bien entendu, selon une variante, l'aube présente en outre, au voisinage de la tête de l'aube 44, un ensemble bride et contre-bride similaire à celui du pied d'aube 42.

La figure 7 représente une virole 50 s'étendant selon une direction axiale X, formée à partir d'une structure fibreuse similaire à la structure fibreuse 10 ou 10'. La section dans la matière hachurée représente la section de la figure 5. L'extrémité axiale 52 de la virole 50 présente une ensemble bride 28 et contre-bride 30 tel que décrit précédemment en référence à la figure 5. Bien entendu, selon une variante, la virole 50 présente en outre, au voisinage de sa seconde extrémité axiale 54, un ensemble bride et contre-bride similaire à celui de la première extrémité axiale 52. La virole 50 forme une pièce cylindrique de section circulaire.

## Revendications

1. Structure fibreuse (10, 10') pour la fabrication d'une pièce composite (24) comprenant une matrice (26) renforcée par ladite structure fibreuse (10, 10'), ladite structure fibreuse (10, 10') étant réalisée par tissage tridimensionnel et présentant une partie principale (12) et une bordure (14) adjacente à la partie principale (12), ladite bordure (14) présentant une épaisseur (E4) supérieure à l'épaisseur (E1) de la partie principale (12) et la bordure (14) comprenant une première partie (16) disposée dans la continuité de la partie principale (12) et une seconde partie (18) superposée à la première partie (16), ladite bordure (14) étant ainsi configurée pour être pliée du côté de la seconde partie (18) depuis une position dépliée dans laquelle la bordure (14) s'étend dans le prolongement de la partie principale (12) vers une position pliée dans laquelle lesdites première et seconde parties (16, 18) forment respectivement une bride (28) et une contre-bride (30) pour la fixation de ladite pièce (24).

2. Structure fibreuse (10, 10') selon la revendication 1, dans laquelle la bordure (14) présente une extrémité libre (14a), la première partie (16) étant partiellement disjointe de la seconde partie (18) du côté de l'extrémité libre (14a) de la bordure (14).

3. Structure fibreuse (10, 10') selon la revendication 1 ou 2, dans laquelle l'épaisseur (E2) de la première partie (16) est différente de l'épaisseur (E3) de la seconde partie (18).

4. Structure fibreuse (10, 10') selon l'une quelconque des revendications 1 à 3, dans laquelle la seconde partie (18) présente des fibres de chaine plus courtes que les fibres de chaine de la première partie (16).

5. Structure fibreuse (10, 10') selon l'une quelconque des revendications 1 à 4, dans laquelle la partie principale (12) s'étend selon une direction longitudinale (L) et selon une direction transversale (T), la première partie (16) s'étendant dans la continuité de la partie principale (12) selon la direction longitudinale (L), les fibres de la première partie (16) étant majoritairement orientées selon la direction longitudinale (L) tandis que les fibres de la seconde partie (18) sont majoritairement orientées selon la direction transversale (T).

6. Pièce composite (24) comprenant une matrice renforcée par une structure fibreuse (10, 10') pour la fabrication d'une pièce composite selon l'une quelconque des revendications 1 à 5, ladite pièce composite (24) présentant une bride (28) et une contre-bride (30) de fixation formées respectivement par la première partie (16) et par la seconde partie (18) de ladite structure fibreuse (10, 10').

7. Pièce composite (24) selon la revendication 6, formant une aube de redressement (40), la bride (28) et la contre-bride (30) étant disposées au voisinage du pied (42) de cette aube de redressement (40).

8. Pièce composite (24) selon la revendication 6, formant une pièce cylindrique (50) de section circulaire, cette pièce cylindrique s'étendant selon une direction axiale (X), la bride (28) et la contre-bride (30) étant annulaires et disposées au voisinage d'une extrémité axiale (52) de la pièce cylindrique (50).

9. Procédé de fabrication d'une structure fibreuse (10, 10') pour la fabrication d'une pièce composite (24) comprenant une matrice renforcée par ladite structure fibreuse (10, 10'), dans lequel on réalise la structure fibreuse (10, 10') selon l'une quelconque des revendications 1 à 5 par tissage tridimensionnel.

10. Procédé de fabrication d'une structure fibreuse (10, 10') selon la revendication 9, dans lequel on ajoute des torons (20T2) lors du tissage de la structure fibreuse (10, 10') pour réaliser la seconde partie (18).

11. Procédé de fabrication d'une structure fibreuse (10, 10') selon la revendication 9 ou 10, dans lequel on délie en partie la seconde partie (18) de la première partie (16).

12. Procédé de fabrication d'une pièce composite (24) comprenant une matrice renforcée par une structure fibreuse (10, 10') dans lequel :
- on fournit une structure fibreuse (10, 10') selon l'une quelconque des revendications 1 à 5 fabriquée par le procédé selon l'une quelconque des revendications 9 à 11,
- on plie la bordure (14) de cette structure fibreuse (10, 10') pour former un ensemble bride (28) et contre-bride (30) pour la fixation de ladite pièce (24), et
- on densifie ladite structure fibreuse (10, 10') avec un polymère (26), les fibres (20L, 20T, 20T2) de ladite structure fibreuse (10, 10') étant noyées dans une matrice formée par le polymère (26).

13. Procédé de fabrication d'une pièce composite (24) selon la revendication 12, dans lequel on usine l'extrémité libre (14a) de la bordure (14) de sorte que l'extrémité libre (16a) de la première partie (16) et l'extrémité libre (18b) de la seconde partie (18) sont disposés dans la continuité l'une de l'autre.

## Patentansprüche

1. Faserstruktur (10, 10') zur Herstellung eines Verbundstücks (24), umfassend eine Matrix (26), die durch die Faserstruktur (10, 10') verstärkt ist, wobei die Faserstruktur (10, 10') durch dreidimensionales Weben hergestellt ist und einen Hauptteil (12) und einen Rand (14) benachbart dem Hauptteil (12) aufweist, wobei der Rand (14) eine größere Dicke (E4) als die Dicke (E1) des Hauptteils (12) aufweist und wobei der Rand (14) einen ersten Teil (16), der in der Kontinuität des Hauptteils (12) angeordnet ist, und einen zweiten Teil (18), der über den ersten Teil (16) gelegt ist, umfasst, wobei der Rand (14) somit ausgelegt ist, um auf der Seite des zweiten Teils (18) aus einer aufgefalteten Position, in welcher sich der Rand (14) in der Verlängerung des Hauptteils (12) erstreckt, in eine zweite gefaltete Position, in welcher der erste und der zweite Teil (16, 18) jeweils einen Flansch (28) und einen Gegenflansch (30) zur Befestigung des Stücks (24) bilden, gefaltet zu werden.

2. Faserstruktur (10, 10') nach Anspruch 1, wobei der Rand (14) ein freies Ende (14a) aufweist, wobei der erste Teil (16) teilweise von dem zweiten Teil (18) auf der Seite des freien Endes (14a) des Rands (14) gelöst ist.

3. Faserstruktur (10, 10') nach Anspruch 1 oder 2, wobei die Dicke (E2) des ersten Teils (16) von der Dicke (E3) des zweiten Teils (18) verschieden ist.

4. Faserstruktur (10, 10') nach einem der Ansprüche 1 bis 3, wobei der zweite Teil (18) kürzere Kettfasern als die Kettfasern des ersten Teils (16) aufweist.

5. Faserstruktur (10, 10') nach einem der Ansprüche 1 bis 4, wobei sich der Hauptteil (12) in einer Längsrichtung (L) und in einer Querrichtung (T) erstreckt, wobei sich der erste Teil (16) in der Kontinuität des Hauptteils (12) in der Längsrichtung (L) erstreckt, wobei die Fasern des ersten Teils (16) mehrheitlich in der Längsrichtung (L) orientiert sind, während die Fasern des zweiten Teils (18) mehrheitlich in der Querrichtung (T) orientiert sind.

6. Verbundstück (24), umfassend eine Matrix, die durch eine Faserstruktur (10, 10') verstärkt ist, zur Herstellung eines Verbundstücks nach einem der Ansprüche 1 bis 5, wobei das Verbundstück (24) einen Flansch (28) und einen Gegenflansch (30) zur Befestigung aufweist, die jeweils aus dem ersten Teil (16) und aus dem zweiten Teil (18) der Faserstruktur (10, 10') gebildet sind.

7. Verbundstück (24) nach Anspruch 6, welches eine Leitschaufel (40) bildet, wobei der Flansch (28) und der Gegenflansch (30) in der Nähe des Fußes (42) dieser Leitschaufel (40) angeordnet sind.

8. Verbundstück (24) nach Anspruch 6, welches ein zylindrisches Stück (50) mit kreisförmigem Querschnitt bildet, wobei sich dieses zylindrische Stück in einer axialen Richtung (X) erstreckt, wobei der Flansch (28) und der Gegenflansch (30) ringförmig sind und in der Nähe eines axialen Endes (52) des zylindrischen Stücks (50) angeordnet sind.

9. Verfahren zur Herstellung einer Faserstruktur (10, 10') zur Herstellung eines Verbundstücks (24), umfassend eine Matrix, die durch die Faserstruktur (10, 10') verstärkt wird, wobei die Faserstruktur (10, 10') nach einem der Ansprüche 1 bis 5 durch dreidimensionales Weben hergestellt wird.

10. Verfahren zur Herstellung einer Faserstruktur (10, 10') nach Anspruch 9, wobei Litzen (20T2) beim Weben der Faserstruktur (10, 10') zur Herstellung des zweiten Teils (18) hinzugefügt werden.

11. Verfahren zur Herstellung einer Faserstruktur (10, 10') nach Anspruch 9 oder 10, wobei der zweite Teil (18) von dem ersten Teil (16) teilweise getrennt wird.

12. Verfahren zur Herstellung eines Verbundstücks (24), umfassend eine Matrix, die durch die Faserstruktur (10, 10') verstärkt wird, wobei:
- eine Faserstruktur (10, 10') nach einem der Ansprüche 1 bis 5 bereitgestellt wird, die durch das Verfahren nach den Ansprüchen 9 bis 11 hergestellt wird,
- der Rand (14) dieser Faserstruktur (10, 10') zur Bildung einer Einheit eines Flansches (28) und Gegenflansches (30) zur Befestigung des Stücks (24) gefaltet wird, und
- die Faserstruktur (10, 10') mit einem Polymer (26) verdichtet wird, wobei die Fasern (20L, 20T, 20T2) der Faserstruktur (10, 10') in eine Matrix eingebettet werden, die aus dem Polymer (26) gebildet wird.

13. Verfahren zur Herstellung eines Verbundstücks (24) nach Anspruch 12, wobei das freie Ende (14a) des Rands (14) derart bearbeitet wird, dass das freie Ende (16a) des ersten Teils (16) und das freie Ende (18b) des zweiten Teils (18) in der Kontinuität voneinander angeordnet werden.

## Claims

1. A fibrous structure (10, 10') for fabricating a composite part (24) comprising a matrix (26) reinforced by said fibrous structure (10, 10'), said fibrous structure (10, 10') being made by three-dimensional weaving and presenting a main portion (12) and a margin (14) adjacent to the main portion (12), said margin (14) presenting a thickness (E4) greater than the thickness (E1) of the main portion (12) and the margin (14) comprising a first portion (16) arranged in continuity with the main portion (12) and a second portion (18) superposed on the first portion (16), said margin (14) thus being configured for being folded towards the second portion (18) from an unfolded position wherein the margin (14) extends in continuity with the main portion (12) to a folded position wherein said first and second portions (16, 18) respectively form a flange (28) and a counter-flange (30) for fastening said part (24).

2. A fibrous structure (10, 10') according to claim 1, wherein the margin (14) presents a free end (14a), the first portion (16) being partially disjoint from the second portion (18) beside the free end (14a) of the margin (14).

3. A fibrous structure (10, 10') according to claim 1 or claim 2, wherein the thickness (E2) of the first portion (16) is different from the thickness (E3) of the second portion (18).

4. A fibrous structure (10, 10') according to any one of claims 1 to 3, wherein the second portion (18) presents warp fibers that are shorter than the warp fibers of the first portion (16).

5. A fibrous structure (10, 10') according to any one of claims 1 to 4, wherein the main portion (12) extends in a longitudinal direction (L) and in a transverse direction (T), the first portion (16) extending in continuity with the main portion (12) along the longitudinal direction (L), a majority of the fibers of the first portion (16) being oriented along the longitudinal direction (L), while a majority of the fibers of the second portion (18) are oriented along the transverse direction (T).

6. A composite part (24) comprising a matrix reinforced by a fibrous structure (10, 10') for fabricating a composite part according to any one of claims 1 to 5, said composite part (24) presenting a fastener flange (28) and a fastener counter-flange (30) formed respectively by the first portion (16) and by the second portion (18) of said fibrous structure (10, 10').

7. A composite part (24) according to claim 6, forming a guide vane (40), the flange (28) and the counter-flange (30) being located in the vicinity of the root (42) of said guide vane (40).

8. A composite part (24) according to claim 6, forming a cylindrical part (50) of circular section, the cylindrical part extending along an axial direction (X), the flange (28) and the counter-flange (30) being annular and being located in the vicinity of an axial end (52) of the cylindrical part (50).

9. A method of fabricating a fibrous structure (10, 10') for fabricating a composite part (24) comprising a matrix reinforced by said fibrous structure (10, 10'), wherein the fibrous structure (10, 10') is according to any one of claims 1 to 5 and is made by three-dimensional weaving.

10. A method of fabricating a fibrous structure (10, 10') according to claim 9, wherein floats (20T2) are added during the weaving of the fibrous structure (10, 10') in order to make the second portion (18).

11. A method of fabricating a fibrous structure (10, 10') according to claim 9 or claim 10, wherein a fraction of the second portion (18) is unlinked from the first portion (16).

12. A method of fabricating a composite part (24) comprising a matrix reinforced by a fibrous structure (10, 10'), comprising:
• providing a fibrous structure (10, 10') according to any one of claims 1 to 5 fabricated by the method according to any one of claims 9 to 11;
• folding the margin (14) of said fibrous structure (10, 10') to form an assembly comprising a flange (28) and a counter-flange (30) for fastening said part (24); and
• densifying said fibrous structure (10, 10') with a polymer (26), the fibers (20L, 20T, 20T2) of said fibrous structure (10, 10') being embedded in a matrix formed by the polymer (26).

13. A method of fabricating a composite part (24) according to claim 12, wherein the free end (14a) of the margin (14) is machined in such a manner that the free end (16a) of the first portion (16) and the free end (18b) of the second portion (18) lie in continuity one with the other.
